# EUROPEAN PATENT APPLICATION

(11) **EP 4 741 066 A1**
(43) Date of publication of application: **13.05.2026**
(21) Application number: 25797676.1
(22) Date of filing: 25.04.2025
(51) Int. Cl.: B05C 1/08, B05D 3/14, H01M 50/403, H01M 50/451

(54) **NOVEL COATING DEVICE AND METHOD FOR COATING SEPARATOR FOR ELECTROCHEMICAL DEVICE USING SAME**

(30) Priority: 30.04.2024 KR 20240057871
(71) Applicant: LG Energy Solution, Ltd., Seoul 07335 (KR)
(72) Inventor: LEE, Seung-Hyun, Daejeon 34122 (KR); KIM, Yu-Bae, Daejeon 34122 (KR); LEE, Byeong-Kyu, Daejeon 34122 (KR); KA, Kyung-Ryun, Daejeon 34122 (KR)
(74) Representative: Hoffmann Eitle
(86) International application number: PCT/KR2025/005641
(87) International publication number: WO 2025/230238

(57) **Abstract**

The present disclosure relates to a novel device for coating of a separator for an electrochemical device and a coating method using the same. Specifically, according to an aspect of the present disclosure, there is an advantage of efficiently pattern-coating a binder on the surface of a separator. In addition, the present disclosure has an advantage of providing a coating method that is easy to change a pattern by reversibly modifying the surface of a coating bar for pattern coating.

## Description

### TECHNICAL FIELD

The present disclosure relates to a novel device for coating a separator for an electrochemical device, a coating method of a separator using the same and a coated separator using the same.

### BACKGROUND

A lithium secondary battery is manufactured through processes of inserting an electrode assembly including positive electrode/separator/negative electrode as a unit into a battery case, injecting an electrolyte solution and sealing the battery case. In this instance, recently, many studies are being conducted to modify the separator to help the separator to perform a function of blocking physical contact between the positive electrode and the negative electrode, and ensure stability of lithium secondary batteries such as flame retardancy and flame resistance.

Firstly, to solve a short circuit between the positive electrode and the negative electrode that occurs when the separator is separated from the positive electrode and the negative electrode adjacent to the separator during operation of the battery, there is a challenge to improve the adhesion strength of the separator with respect to the positive electrode and the negative electrode. To this end, technology has been developed to form an adhesive layer on the surface of the separator by using an adhesive binder. However, when the binder is applied to the entire surface of the separator, interfacial resistance between the separator and the electrode increases. In addition, when the adhesive layer is formed over the entire surface of the separator, a slitting portion may contact the adhesive layer when tailoring the separator into a desired shape at the later stage of the separator manufacturing process, causing device contamination and quality degradation of the separator.

In addition to the technology that forms the adhesive layer on the surface of the separator, technology that coats the surface of the separator with inorganic particles to provide flame retardancy to the surface of the separator is being developed. In this instance, because the surface of the separator coated with the inorganic particles has little or no adhesion strength, technology that forms an adhesive layer on the inorganic particle coating layer to provide additional adhesion strength is being developed. Likewise, when the adhesive layer is formed over the entire surface of the inorganic particle coating layer, the resistance of the separator increases, and the adhesive layer may not be evenly formed on the porous coating layer.

To solve these problems, technology has been devised to form the adhesive layer on the surface of the separator into a pattern shape. Despite many studies with varying composition of the coating layer, ideal pattern coating has not yet been achieved due to a lack of technology for pattern coating on the surface of the separator.

Accordingly, the present disclosure aims to provide a novel coating device and method that may be used for coating of the separator.

### DISCLOSURE

### Technical Problem

The present disclosure is directed to providing a coating device designed to solve the above-described problems, a coating method and a coated separator for an electrochemical device using the same.

Specifically, according to an aspect of the present disclosure, the present disclosure is directed to providing a novel device for coating an adhesive layer on the surface of a separator into a pattern shape.

In particular, according to an aspect of the present disclosure, the present disclosure is directed to providing a pattern varying coating device for forming various patterns on the surface of the separator and a coating method using the same.

Further, according to an aspect of the present disclosure, the present disclosure is directed to providing a method for manufacturing a separator having an adhesive layer on the surface in a pattern shape, thereby enhancing the ease of a slitting process of the separator.

In addition, the present disclosure is directed to providing a separator for an electrochemical device with improved resistance characteristics and adhesive characteristics, manufactured by using the novel device.

### Technical Solution

To achieve the above-described objectives,
according to an aspect of the present disclosure, provided is a coating device of the following embodiments.

The coating device according to a first embodiment includes:
a coating bar of a cylindrical shape,
a surface treatment unit spaced apart from the coating bar, and
a pattern masking unit positioned between the coating bar and the surface treatment unit,
wherein the surface treatment unit includes at least one of a plasma irradiator or a corona irradiator, and
wherein the pattern masking unit has a penetrable area and an impenetrable area of plasma or corona.

According to a second embodiment, in the first embodiment,
the pattern masking unit may be made of a metal plate or a polymer film.

According to a third embodiment, in the first or second embodiment,
the pattern masking unit may have a pattern where the penetrable area and the impenetrable area are repeatedly arranged in an alternating manner.

According to a fourth embodiment, in any one of the first to third embodiments,
the coating device may include a coating solution tank to provide a coating solution to at least a part of the surface of the surface-treated coating bar, and the coating solution may include a binder.

According to a fifth embodiment, in any one of the first to fourth embodiments,
the coating solution may further include inorganic particles.

According to a sixth embodiment, in any one of the first to fifth embodiments,
the coating device may further include a transport unit to provide a coating substrate to the coating bar, at least a part of the surface of which is coated with the coating solution.

According to a seventh embodiment, in any one of the first to sixth embodiments,
the coating substrate may be a separator for an electrochemical device.

According to another aspect of the present disclosure, provided is a coating method of a separator of the following embodiments.

The coating method of the separator according to an eighth embodiment includes:
(S1) treating at least a part of a surface of a coating bar of a cylindrical shape, and
(S2) coating a coating solution containing a binder on at least one surface of a coating substrate using the surface-treated coating bar,
wherein the step (S1) includes irradiating plasma or corona onto the surface of the coating bar, at least a part of which has been pattern-masked.

According to a ninth embodiment, in the eighth embodiment,
the surface of the coating bar before the surface treatment in the step (S1) may be hydrophobic, and the surface of the coating bar with the surface treatment may be modified to make it hydrophilic.

According to a tenth embodiment, in the eighth or ninth embodiment,
the coating solution may be a dispersion in which the binder is dispersed in an aqueous solvent.

According to an eleventh embodiment, in any one of the eighth to tenth embodiments,
the coating solution may further include inorganic particles.

According to a twelfth embodiment, in any one of the eighth to eleventh embodiments,
the coating substrate may include a porous polymer substrate.

According to a thirteenth embodiment, in any one of the eighth to twelfth embodiments,
the coating substrate may include a porous polymer substrate and a porous coating layer on at least one surface of the porous polymer substrate, the porous coating layer including inorganic particles.

According to still aspect of the present disclosure, provided is a separator for an electrochemical device of the following embodiments.

The separator according to a fourteenth embodiment is:
a separator for an electrochemical device having at least one coated surface according to any one of the eighth to thirteenth embodiments,
wherein the coated surface of the separator has pattern coating with the binder.

### Advantageous Effects

The coating device according to an aspect of the present disclosure may increase the efficiency of the method for pattern coating of the adhesive layer on the surface of the separator.

Additionally, as the coating device coats the adhesive layer on the surface of the separator into a pattern shape, there is an advantage of enhancing the ease of tailoring the separator in the subsequent separator manufacturing process or an electrochemical device manufacturing process.

Furthermore, the coating device has an advantage of achieving stable pattern coating of the hydrophilic coating solution by hydrophilic surface modification of the coating bar for pattern coating.

In addition, with the coating device, there is an advantage of forming various coating patterns by reversible surface modification of the coating bar for pattern coating.

### BRIEF DESCRIPTION OF THE DRAWINGS

FIG. 1 is a diagram of a coating device 1 according to an embodiment of the present disclosure.
FIG. 2 is a diagram of a pattern masking unit 30 according to an embodiment of the present disclosure.
FIG. 3 is a diagram showing the operation of a coating device according to an embodiment of the present disclosure.
FIG. 4 is a diagram showing a surface change of a coating bar with non-permanent surface modification according to an embodiment of the present disclosure.

### BEST MODE

Hereinafter, the present disclosure will be described in detail.

Unless the context clearly indicates otherwise, the terms "comprise" and "include" when used in this specification, specify the presence of the stated elements, but do not preclude the presence or addition of one or more other elements.

It should be understood that certain terms used herein are for the purpose of convenience and not intended to limit the present disclosure. Additionally, the words indicating directions such as up, down, left, right, front, rear, in and out indicate directions in the drawings to which reference is made, or each indicates a direction toward or away from the geometric center of the stated device or system or its components.

### Coating device and coating method

A coating device according to an aspect of the present disclosure includes:
a coating bar of a cylindrical shape,
a surface treatment unit spaced apart from the coating bar, and
a pattern masking unit positioned between the coating bar and the surface treatment unit,
wherein the surface treatment unit includes at least one of a plasma irradiator or a corona irradiator, and
wherein the pattern masking unit has a penetrable area and an impenetrable area of plasma or corona.

In an embodiment of the present disclosure, the coating device may be used for pattern coating of an adhesive layer containing a binder on one surface of a separator, but the use of the coating device is not limited thereto.

In another embodiment of the present disclosure, the coating device may be used for pattern coating of a porous coating layer containing a binder and inorganic particles on one surface of the separator, but the use of the coating device is not limited to thereto.

In an embodiment of the present disclosure, the separator serving as a coating substrate may be, for example, a first type or a second type as described below. However, the present disclosure is not limited thereto.

The first type separator includes only a porous substrate. That is, it is used as a separator of an electrochemical device, to be specific, a secondary battery, and the separator may act as an ion-conducting barrier that allows ions to pass through while blocking electrical contact between the positive electrode and the negative electrode and may be in the form of a porous film or a porous sheet. In addition, the separator may be made of a non-woven fabric or a polyolefin-based material.

According to an embodiment of the present disclosure, when the coating substrate is the first type separator, the coating device may form the adhesive layer containing the binder on the surface of the porous substrate into a pattern shape.

According to another embodiment of the present disclosure, when the coating substrate is the first type separator, the coating device may form the porous coating layer containing the binder and the inorganic particles on the surface of the porous substrate into a pattern shape.

The second type separator has the porous coating layer including the inorganic particles on the porous substrate. The porous coating layer contains heat-resistant inorganic particles on the porous substrate to improve the heat resistance of the separator. According to an embodiment, the porous coating layer may include only the inorganic particles. In this instance, the porous separator having the porous coating layer has little or no adhesion strength with respect with the electrode (positive or negative). In addition, according to another embodiment, in addition to the inorganic particles, the porous coating layer may further include a coating layer binder to hold the inorganic particles together. Specifically, when the porous coating layer includes the inorganic particles and the coating layer binder, the inorganic particles may be included in an amount of 80 wt% or more, 85 wt% or more, 90 wt% or more, 95 wt% or more, or 98 wt% or more based on the total weight of the porous coating layer, and in this case, the adhesion strength between the separator and the electrode is still insufficient.

According to an embodiment of the present disclosure, when the coating substrate is the second type separator, the coating device may form the adhesive layer containing the binder on the surface of the porous coating layer into a pattern shape in order to provide additional adhesion strength.

Specifically, the coating device according to an aspect of the present disclosure is used for pattern coating of a coating solution on the surface of the coating substrate using a bar coating device.

In an embodiment of the present disclosure, the coating bar is not limited to a particular material but may include any coating bar commonly used in the bar coating device. The coating bar may be typically made of stainless steel, but may include, but not limited to, other metal, polymer or a mixture thereof.

For pattern coating using the coating bar made of stainless steel as usually, some methods directly form an emboss or intaglio pattern in the surface of the coating bar and perform pattern coating using the same. However, in this case, because it is difficult to change the pattern after the emboss or intaglio pattern is formed in the coating bar, they are not a suitable coating method. In addition, due to poor wetting of the hydrophilic coating solution on the surface of the coating bar, wetting between the surface of the coating bar and the coating solution is still poor even in the presence of the emboss or intaglio pattern in the surface of the coating bar. To achieve the desired coating loading, it is necessary to repeat the coating process multiple times or the coating quality decreases.

According to an aspect of the present disclosure, there are advantages of nonpermanently modifying the surface of the coating bar and providing the suitable coating device for pattern coating.

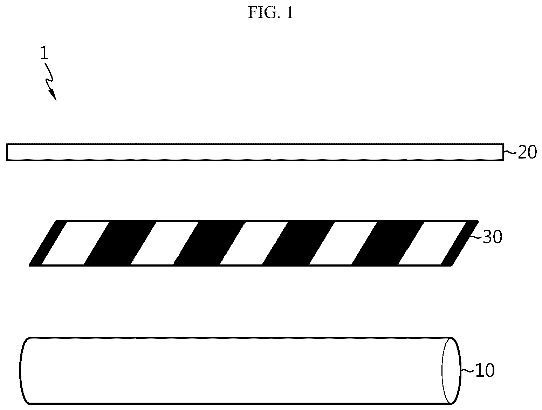

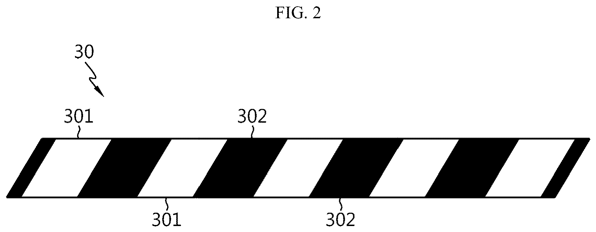

FIG. 1 is a diagram of the coating device according to an embodiment of the present disclosure, and FIG. 2 is a diagram of the pattern masking unit used in the coating device according to an embodiment of the present disclosure.

Referring to FIGS. 1 and 2, the coating device includes the coating bar 10 of the cylindrical shape, the surface treatment unit 20 spaced apart from the coating bar, and the pattern masking unit 30 positioned between the coating bar and the surface treatment unit. The surface treatment unit includes at least one of the plasma irradiator or the corona irradiator (not shown). The surface of the cylindrical shape 10 is modified by the plasma or corona emitted from the plasma irradiator or the corona irradiator, and for the modification of the cylindrical surface into a pattern shape, the pattern masking unit 30 has the penetrable area 301 and the impenetrable area 302 of the plasma or corona.

According to an embodiment of the present disclosure, the pattern masking unit having the penetrable area and the impenetrable area of the plasma or corona may perform a function of modifying only an area of the surface of the coating bar where the plasma or corona passes through the penetrable area and reaches the surface of the coating bar.

In this instance, the penetrable area and the impenetrable area of the pattern masking unit may be separately defined, and for example, the penetrable area and the impenetrable area may have a pattern where they are repeatedly arranged in an alternating manner, but the present disclosure is not limited thereto.

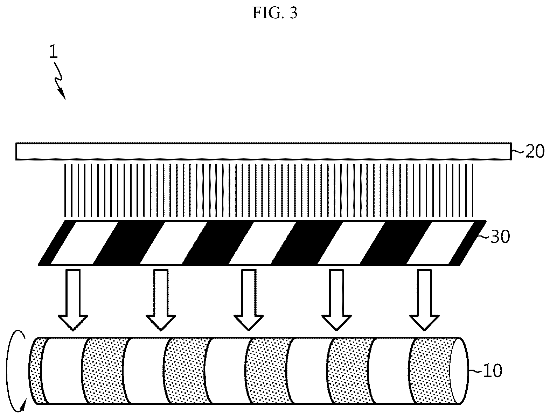

FIG. 3 is a diagram showing the operation of the coating device 1 according to an embodiment of the present disclosure.

Referring to FIG. 3, the surface treatment unit 20 irradiates the plasma or corona from the plasma irradiator or the corona irradiator toward the surface of the coating bar 10. In this instance, the emitted plasma or corona passes through the pattern masking unit 30 and modifies the surface of the coating bar. Specifically, the surface of the coating bar is only modified at an area where the plasma or corona having passed through the penetrable area 301 reaches, and accordingly, the surface of the coating bar is pattern-modified according to the pattern of the pattern masking unit 30. As shown in FIG. 3, the surface modification of the coating bar of the cylindrical shape may be preferably done evenly along the circumference, and when the plasma or corona is emitted from the surface treatment unit, the coating bar may preferably rotate at a constant speed.

According to an embodiment of the present disclosure, the plasma irradiator and the corona irradiator are not limited to a particular type and may include any device that modifies the surface of the coating bar. Specifically, the plasma irradiator and the corona irradiator are not limited to a particular type and may include any device that modifies the surface of the coating bar from hydrophobic to hydrophilic.

In this specification, the surface modification by the plasma treatment may refer to surface treatment by plasma generated by electric discharge after feeding argon or nitrogen gas in a vacuum or atmospheric pressure condition, but the present disclosure is not limited thereto, and any commonly used plasma treatment method may be used.

In this specification, the surface modification by the corona treatment may refer to surface treatment by high-frequency discharge, but the present disclosure is not limited thereto, and any commonly used plasma treatment method may be used.

According to an embodiment of the present disclosure, the surface treatment unit may preferably include the plasma irradiator when the material of the coating bar includes metal, polymer or a mixture thereof.

According to another embodiment of the present disclosure, the surface treatment unit may preferably include the corona irradiator when the material of the coating bar includes polymer.

According to an embodiment of the present disclosure, by the surface modification by the plasma treatment and the surface modification by the corona treatment, the surface of the coating bar may be modified to make it hydrophilic. In particular, the surface of the coating bar may undergo hydrophilic pattern modification by the pattern masking unit.

In this instance, the surface modification by the plasma treatment and the surface modification by the corona treatment are non-permanent modification methods, and the modified surface of the coating bar may return to its original property after a predetermined time or by a recovery process.

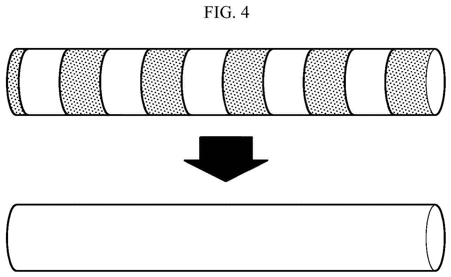

FIG. 4 is a diagram showing a surface change of the coating bar with the non-permanent surface-modification according to an embodiment of the present disclosure. Referring to FIG. 4, the surface-modified coating bar may have surface pattern fading and return to its single property over time.

According to an embodiment of the present disclosure, the pattern masking unit plays a role interrupting the penetration of the plasma or corona into a pattern shape to allow the plasma or corona emitted from the surface treatment unit to penetrate some areas and reach the coating bar and block some areas to prevent the plasma or corona from reaching the coating bar.

To this end, the pattern masking unit 30 has the penetrable area 301 and the impenetrable area 302 of the plasma or corona.

According to an embodiment of the present disclosure, the pattern formed by the penetrable area and the impenetrable area of the pattern masking unit may be transferred to the surface of the coating bar. The pattern is not limited to a particular shape in the present disclosure.

In an embodiment of the present disclosure, the pattern may have a pattern where each of the penetrable area and the impenetrable area is rectangular in shape and is repeatedly arranged in an alternating manner, but the present disclosure is not limited thereto.

In an embodiment of the present disclosure, because the pattern masking unit has the impenetrable area that blocks the plasma or corona as described above, the pattern masking unit is not limited to a particular material and may include any material that blocks the plasma or corona. For example, the pattern masking unit may be made of polymer such as a polymer film, metal such as stainless steel, or a mixture thereof.

In an embodiment of the present disclosure, when the pattern masking unit is made of metal such as stainless steel, the pattern formed in the pattern masking unit may be formed through a waterjet cutter or a metal etchant, but the pattern forming method of the pattern masking unit is not limited thereto.

In another embodiment of the present disclosure, when the pattern masking unit is made of polymer such as a polymer film, the pattern formed in the pattern masking unit may be formed through a known cutting method, but the pattern forming method of the pattern masking unit is not limited thereto.

According to an embodiment of the present disclosure, the coating device may further include a coating solution tank to provide the coating solution to the coating bar after the patterning surface treatment by the surface treatment unit and the pattern masking unit. In this instance, the coating solution tank may include a binder.

Specifically, when forming the adhesive layer containing the binder on the surface of the separator by the coating device, the coating solution tank may accommodate an adhesive binder.

In addition, when forming the porous coating layer containing the binder and the inorganic particles on the surface of the separator by the coating device, in addition to the binder, the coating solution tank may further include the inorganic particles.

In an embodiment of the present disclosure, when forming the adhesive layer containing the binder on the surface of the separator using the coating device, the binder contained in the coating solution tank is not limited to a particular type and may include any type of adhesive binder. For example, the adhesive binder may include an acrylic polymer, a PVDF-based polymer or a mixture thereof.

The acrylic polymer may include, for example, (meth)acrylic polymer. The (meth) acrylic polymer refers collective to polymer containing (meth)acrylic acid ester as a monomer. The monomer of the acrylic polymer may include, for example, butyl (meth) acrylate, 2-ethylhexyl (meth)acrylate, ethyl (meth)acrylate, methyl (meth)acrylate, hydroxyethyl (meth)acrylate, hydroxymethyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, 1-hydroxy-n-propyl (meth)acrylate, 2-hydroxy-n-propyl (meth)acrylate, 3-hydroxy-n-propyl (meth)acrylate, lauryl (meth)acrylate, tetradecyl (meth)acrylate, acrylamide, (meth)acrylic acid, or a mixture of two or more thereof, but the present disclosure is not limited thereto. The acrylic polymer may include a homopolymer of the above-described monomers, a copolymer of two or more monomers or a blend of each homopolymer, but the present disclosure is not limited thereto.

The PVdF-based polymer may include at least one of a homopolymer of vinylidene fluoride (i.e., polyvinylidene fluoride), a copolymer of vinylidene fluoride and a copolymerizable monomer or a mixture thereof. The monomer may include, for example, a fluorinated monomer and/or a chlorinated monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether including perfluoro(methylvinyl)ether (PMVE), perfluoro(ethylvinyl)ether (PEVE), and perfluoro(propylvinyl)ether (PPVE); perfluoro(1,3-dioxole); or perfluoro(2,2-dimethyl-1,3-dioxole) (PDD). In an embodiment of the present disclosure, the PVDF-based polymer may include at least one selected from polyvinylidene fluoride (PVDF), polyvinylidene fluoride-hexafluoropropylene (PVDF-HFP), polyvinylidene fluoride-chlorofluoroethylene (PVDF-CTFE), polyvinylidene fluoride-tetrafluoroethylene (PVdF-TFE) and polyvinylidene fluoride-trifluoroethylene (PVdF-TrFE), but the present disclosure is not limited thereto.

In an embodiment of the present disclosure, when forming the porous coating layer containing the binder and the inorganic particles on the surface of the separator using the coating device, the binder and the inorganic particles contained in the coating solution tank are not limited to a particular type and may include any type that may be used to form the porous coating layer on the surface of the separator. For example, the binder may include the above-described adhesive binder. The inorganic particles are not limited to a particular type and may include an electrochemically stable one.

In an embodiment of the present disclosure, the inorganic particles are not limited to a particular type and may include any type in which oxidation and/or reduction reaction does not take place within the operating voltage range of the electrochemical device including the separator (for example, 0 to 5 V vs Li/Li+).

In an embodiment of the present disclosure, the coating solution is not limited to a particular type and may include a suspension in which the binder and/or the inorganic particles are dispersed in a dispersion medium, or a solution in which the binder and/or the inorganic particles are dissolved in a solvent. For example, the dispersion medium or the solvent may include water, acetone, tetrahydrofuran, methylene chloride, chloroform, dimethylformamide, N-methyl-2-pyrrolidone (NMP), cyclohexane or a mixture of two or more thereof, but the present disclosure is not limited thereto.

According to an aspect of the present disclosure, when the coating solution is provided to the surface-modified coating bar, preferably, the coating solution may be applied to the hydrophilic surface-modified area of the coating bar and the coating solution may not be applied to the unmodified area.

According to another aspect of the present disclosure, when the coating solution is provided to the surface-modified coating bar, preferably, the coating solution may not be applied to the hydrophilic surface-modified area of the coating bar, and the coating solution may be applied to the unmodified area.

The area where the coating solution is applied to the surface-modified coating bar may differ depending on the specific composition of the coating solution, and there are no specific limitations in the present disclosure.

According to an embodiment of the present disclosure, the coating device may further include a transport unit to provide the coating substrate to the coating bar coated with the coating solution after the coating solution is provided to at least a part of the surface of the coating bar.

The coating substrate may be a separator for an electrochemical device as described above. Additionally, the separator serving as the coating substrate may be the first or second type described above, but the present disclosure is not limited thereto.

According to another aspect of the present disclosure, provided is a method for coating a separator for an electrochemical device using the above-described coating device.

The coating method of the separator according to another aspect of the present disclosure includes:
(S1) treating at least a part of the surface of the coating bar of the cylindrical shape, and
(S2) coating the coating solution containing the binder on at least one surface of the coating substrate using the surface-treated coating bar,
   wherein the step (S1) includes irradiating plasma or corona onto the surface of the coating bar, at least a part of which has been pattern-masked.

According to an embodiment of the present disclosure, the surface of the coating bar before the surface treatment in the step (S1) may be hydrophobic, and the surface of the coating bar with the surface treatment may be modified to make it hydrophilic.

According to another embodiment of the present disclosure, the surface of the coating bar before the surface treatment in the step (S1) may be hydrophilic, and the surface of the coating bar with the surface treatment may be modified to make it hydrophobic.

In this specification, hydrophobic and hydrophilic of the surface of the coating bar before and after the surface treatment are relative concepts, and in relativity, the degree of hydrophobicity/hydrophilicity may be measured by a known method for measuring hydrophobicity/hydrophilicity, for example, the water droplet contact angle on a surface, but the measurement method is not limited to a particular one.

In an embodiment of the present disclosure, the coating solution may be provided from the coating solution tank to the surface-treated coating bar, and at least one surface of the coating substrate may be coated using the coating bar provided with the coating solution. In this instance, the coating solution includes the binder as described above.

In an embodiment of the present disclosure, as described above, the coating solution may be a dispersion in which the binder is dispersed in the dispersion medium. For example, the coating solution may be a dispersion in which the binder is dispersed in an aqueous solvent. In this instance, the aqueous solvent may include, for example, water (H₂O).

According to an embodiment of the present disclosure, when the surface of the coating bar undergoes patterning modification by plasma irradiation or corona irradiation after pattern masking in the surface of the coating bar, the surface modification of the coating bar is performed in a non-permanent manner, so it may be possible to changing the pattern in the surface of the coating bar by changing the pattern of the pattern masking unit after the surface of the coating bar has been modified.

### Separator and electrochemical device

According to another aspect of the present disclosure, provided is a separator for an electrochemical device having the pattern-coated surface with the binder using the above-described coating device.

In an embodiment of the present disclosure, the electrochemical device may include, for example, a primary battery, a secondary battery, a super capacitor, or an electric double layer capacitor. More specifically, the secondary battery may include a lithium ion secondary battery.

Further, an electrochemical device including the separator may be provided.

The electrochemical device includes an electrode assembly including the separator; a first electrode and a second electrode, each on each of two surfaces of the separator; an electrolyte; and a case accommodating the electrode assembly and the electrolyte.

In an embodiment of the present disclosure, the first electrode and the second electrode may be a positive electrode or a negative electrode, respectively. Each of the positive electrode and the negative electrode may include a current collector and an electrode active material coated on, and is not limited to a particular size or shape, or a particular type of active material.

In an embodiment of the present disclosure, the electrolyte may include any electrolyte commonly used according to the type of the electrochemical device or the type of the first electrode and the second electrode, and is not limited to a particular composition.

In an embodiment of the present disclosure, the case may include any type of case commonly used as a battery case, and is not limited to a particular shape according to the use of the battery. For example, the case may be cylindrical, prismatic, pouch-shaped or coin-shaped using a can.

When the electrode assembly is completed, the electrochemical device may be manufactured by housing it in the case, injecting the electrolyte and sealing the case by a commonly used method, and in this instance, the electrochemical device may be, for example, a lithium secondary battery.

### [List of Reference Numerals]

1: Coating device
10: Coating bar
20: Surface treatment unit
30: Pattern masking unit
301: Penetrable area
302: Impenetrable area

## Claims

1. A coating device comprising:
a coating bar of a cylindrical shape,
a surface treatment unit spaced apart from the coating bar, and
a pattern masking unit positioned between the coating bar and the surface treatment unit,
wherein the surface treatment unit includes at least one of a plasma irradiator or a corona irradiator, and
wherein the pattern masking unit has a penetrable area and an impenetrable area of plasma or corona.

2. The coating device according to claim 1,
wherein the pattern masking unit is made of a metal plate or a polymer film.

3. The coating device according to claim 1,
wherein the pattern masking unit has a pattern where the penetrable area and the impenetrable area are repeatedly arranged in an alternating manner.

4. The coating device according to claim 1, further comprising:
a coating solution tank to provide a coating solution to at least a part of the surface of the surface-treated coating bar,
wherein the coating solution includes a binder.

5. The coating device according to claim 4,
wherein the coating solution further includes inorganic particles.

6. The coating device according to claim 1, further comprising:
a transport unit to provide a coating substrate to the coating bar, at least a part of the surface of which is coated with the coating solution.

7. The coating device according to claim 6,
wherein the coating substrate is a separator for an electrochemical device.

8. A method for coating a separator for an electrochemical device, comprising:
(S1) treating at least a part of a surface of a coating bar of a cylindrical shape, and
(S2) coating a coating solution containing a binder on at least one surface of a coating substrate using the surface-treated coating bar,
wherein the step (S1) includes irradiating plasma or corona onto the surface of the coating bar, at least a part of which has been pattern-masked.

9. The method for coating the separator for the electrochemical device according to claim 8,
wherein the surface of the coating bar before the surface treatment in the step (S1) is hydrophobic, and the surface of the coating bar with the surface treatment is modified to make it hydrophilic.

10. The method for coating the separator for the electrochemical device according to claim 8,
wherein the coating solution is a dispersion in which the binder is dispersed in an aqueous solvent.

11. The method for coating the separator for the electrochemical device according to claim 8,
wherein the coating solution further includes inorganic particles.

12. The method for coating the separator for the electrochemical device according to claim 8,
wherein the coating substrate includes a porous polymer substrate.

13. The method for coating the separator for the electrochemical device according to claim 8,
wherein the coating substrate includes a porous polymer substrate and a porous coating layer on at least one surface of the porous polymer substrate, the porous coating layer including inorganic particles.

14. A separator for an electrochemical device having at least one surface coated by the method according to any one of claims 8 to 13,
wherein the coated surface of the separator has pattern coating with the binder.
